# EUROPEAN PATENT APPLICATION

(11) **EP 2 724 625 A1**
(43) Date of publication of application: **30.04.2014**
(21) Application number: 12306337.2
(22) Date of filing: 26.10.2012
(51) Int. Cl.: A23L 1/00, A23L 1/337, A23L 3/46, A21D 2/36

(54) **Microalgal flour granules and process for preparation thereof**

(71) Applicant: Roquette Freres, 62136 Lestrem (FR)
(72) Inventor: Guillemant, Marilyne, 62120 Aire sur la Lys (FR); Lefèvre, Philippe, 59660 Haverskerque (FR); Lis, José, 59253 La Gorgue (FR); Passé, Damien, 59500 Douai (FR); Patinier, Samuel, 59000 Lille (FR)
(74) Representative: Gallois, Valérie

(57) **Abstract**

The present invention relates to microalgal flour granules, and optionally, lipid-rich microalgal flour.

## Description

### Technical Field

The present invention relates to microalgal flour granules, and optionally, lipid-rich microalgal flour.

### Background

There are at least several algal species which can be used in food, most being "macroalgae" such as kelp, sea lettuce (*Ulva lactuca*) and red algae for food, of the *Porphyra* (cultivated in Japan) or dulse (red alga *Palmaria palmata*) type.

However, besides these macroalgae, there are also sources of algae represented by the "microalgae", i.e. photosynthetic or nonphotosynthetic single-cell microscopic algae of marine or nonmarine origin, cultivated for their applications in biofuel or food.

For example, spirulina (*Arthrospira platensis*) is cultivated in open lagoons (by phototrophy) for use as a food supplement or incorporated in small amounts into confectionery or drinks (generally less than 0.5% w/w).

Other lipid-rich microalgae, including certain species of *Chlorella,* are also popular in Asian countries as food supplements (mention is made of microalgae of the *Crypthecodinium* or *Schizochytrium* genus). The production and use of microalgal flour is also disclosed in WO 2010/120923, and WO 2010/045368.

The oil fraction of the microalgal flour, which can be composed essentially of monounsaturated oils, may provide nutritional and health advantages compared with the saturated, hydrogenated and polyunsaturated oils often found in conventional food products.

In endeavouring to make a microalgal flour from microalgal biomass significant difficulties remain. For example, when using microalgae with a high oil content (e.g., 10, 25, 50 or even 75% or more by dry cell weight, an undesirably sticky dry powder may be obtained. This may require the addition of flow agents (including silica-derived products).

Problems of water-dispersibility of the dried biomasss flours, which then have poorer wettability properties, can also be encountered.

There is therefore still an unsatisfied need for novel forms of lipid-rich microalgal biomass flour in order to make it possible to easily incorporate them, on a large scale, into food products which must remain delicious and nutritive.

### Summary of the Invention

The present invention relates to a microalgal flour granules, characterized in that they have at least of the following characteristics:
- a multimodal particle size distribution, measured on a particle size analyser, of from 2 to 400 µm,
- flow grades, determined according to a test A,
   ○ 0.5 to 60% by weight for the oversize at 2000 µm,
   ○ 0.5 to 60% by weight for the oversize at 1400 µm,
   ○ 0.5 to 95% by weight for the oversize at 800 µm,
- a degree of wettability, expressed according to a test B, by the height of the product settled in a beaker, at a value of 0.2 to 4.0 cm, preferably 1.0 to 3.0 cm.

Optionally, the granules may have an aerated bulk density of 0.30 to 0.50 g/ml.

Optionally, the granules may have a specific surface area according to the BET method of 0.10 to 0.70 m²/g.

In a first particular embodiment, they have:
- a bimodal particle size distribution, from 2 to 60 µm, comprising two populations centred on 4 µm and 30 µm;
- flow grades, determined according to a test A,
   ○ 30 to 60% by weight of oversize at 2000 µm,
   ○ 20 to 60% by weight of oversize at 1400 µm,
   ○ 0.5 to 20% by weight of oversize at 800 µm,
- a degree of wettability, expressed according to a test B, by the height of the product settled in a beaker, at a value of 0.2 to 2.0 cm, preferably 1.2 to 1.4 cm.

Optionally, the granules may have a specific surface area according to the BET method of 0.50 to 0.70 m²/g, preferably of 0.55 m²/g.

In a second particular embodiment, they have:
- a trimodal particle size distribution, from 2 to 400 µm, comprising three populations centred on 4 µm, 40 µm and 100 µm,
- flow grades, determined according to a test A,
   ○ 0.5 to 20% by weight of oversize at 2000 µm,
   ○ 0.5 to 20% by weight of oversize at 1400 µm,
   ○ 60 to 95% of oversize at 800 µm,
- a degree of wettability, expressed according to a test B, by the height of the product settled in a beaker, at a value of 2.0 to 4.0 cm, preferably 2.6 to 2.9 cm.

Optionally, the granules may have have a specific surface area according to the BET method of 0.15 to 0.25 m²/g, preferably of 0.20 m²/g.

In a particular embodiment, the dispersibility of the granules of the invention in water is reflected by:
- a bimodal particle size distribution having two populations centred on 0.4 and 4 µm,
- a Zeta potential of -45 mV for a pH > 5 and a pI of 2.4.

In a preferred embodiment, the percentage of lipid in the granules is at least 25% by dry weight.

In another preferred embodiment, the percentage of intact cells in the granules is 25% to 75%.

The present also relates to a process for preparing the granules according to the present invention, characterized in that it comprises the following steps:
1) preparing a microalgal flour emulsion in water at a dry matter content of 15 to 40% by dry weight,
2) introducing this emulsion into a high-pressure homogeniser,
3) spraying it in a vertical spray-drier equipped with a moving belt at its base, and with a high-pressure nozzle in its upper part, while at the same time regulating:
   a) the pressure applied at the spray nozzles at values of more than 100 bar, preferably at 100 to 150 bar, or at values of less than 50 bar, so as to select the particle size distribution of the droplets sprayed,
   b) the spray angle is 50° to 80°, at an inlet temperature of 160° to 250°C, or 160° to 200°C, or 170° to 190°C, and
   c) the outlet temperature in this spray-drying zone is 55° to 90°C, preferably at 60° to 70°C,
4) regulating the inlet temperatures of the drying zone on the moving belt to 40° to 80°C, preferably at 60° to 80°C, and the outlet temperature of 40° to 80°C, preferably 60° to 70°C, and regulating the inlet temperatures of the cooling zone at a temperature of 10° to 40°C, preferably at 10° to 20°C, and the outlet temperature of 20° to 80°C, preferably 20° to 60°C,
5) collecting the microalgal flour granules thus obtained.

Preferably, for the granules according to the first embodiment with a bimodal particle size distribution, the process is characterized in that
- the pressure applied at the spray nozzles is greater than or equal to 100 bar,
- the spray angle 65 to 70°

Preferably, for the granules according to the second embodiment with a trimodal particle size distribution, the process is characterized in that
- the pressure applied at the spray nozzles is less than or equal to 50 bar,
- the spray angle is 65 to 70°.

The present invention further relates to the use of the granules of the present invention or obtained according to the process of the present invention, in a food product. Optionally, the granules can be as disclosed in the first embodiment with a bimodal particle size distribution. Optionally, the granules can be alternatively as disclosed in the second embodiment with a trimodal particle size distribution.

Finally, the present invention relates to a food product containing the granules of the present invention, or obtained according to the process of the present invention. Preferably, the product is selected from the group consisting of soup, sauce, condiment, ice-cream, dehydrated eggs, dough, bread, cake, cookie, or dry baked-good mix.

### Detailed Description

For the purpose of the invention, the term "microalgal flour" means a substance comprised of a plurality of particles of microalgal biomass. The microalgal biomass is derived from algal cells, which may be either whole, disrupted, or a combination of whole and disrupted cells. The microalgal cells may be grown in the dark (e.g., *Chlorella* grown in the dark on a fixed carbon source). In a preferred embodiment, the microalgal flour granules contains at least 80 % in weight, more preferably at least 90, 95 or 99 % in weigh of microalgal biomass.

The term "oversize" means the particles in a particle distribution that are greater in size than a given threshold, either numerically or physically, as in the mass fraction or other measure of particles retained by a filter of a given porosity.

Embodiments of the present invention relate to microalgal biomass suitable for human consumption which is rich in nutrients, such as lipids or proteins. For example, the microalgae may be rich in lipids. For example, the microalgal biomass may comprise at least 10% by dry weight of lipid, preferably at least 25 to 35% or more by dry weight of lipid. By "lipid-rich" is intented to refer to at least 10% by dry weight of lipid, preferably at least 25 to 35% or more by dry weight of lipid.

In a preferred embodiment, the biomass contains at least 25%, at least 50%, or at least 75% by dry cell weight of lipid.

In a preferred embodiment, the microalgae are of the *Chlorella* genus. *Chlorella protothecoides* is one such species of microalgae that is suitable for use in preparing a microalgal flour.

Embodiments of the present invention relate to microalgal flour granules which have specific particle size distribution, flow capability and wettability properties.

Embodiments of the present invention also relate to microalgal flour granules which have particular aerated bulk density and specific surface area parameters, and also an excellent ability to disperse in water.

Embodiments of the present invention relate to the process for preparing these microalgal flour granules.

In the microalgal flour, the microalgal cell wall or cell debris can optionally encapsulate the oil, at least until the food product containing it is cooked, thereby increasing the shelf life of the oil.

The microalgal flour may also provide other benefits, such as micronutrients, dietary fibres (soluble and insoluble carbohydrates), phospholipids, glycoproteins, phytosterols, tocopherols, tocotrienols, and selenium.

The microalgae may be modified to have reduced amounts of pigments. For example, Chlorella *protothecoides* may be modified so as to be reduced in or devoid of pigments. The modification may be accomplished by Ultraviolet (UV) and/or chemical mutagenesis.

For example, *Chlorella protothecoides* was exposed to a cycle of chemical mutagenesis with N-methyl-N'-nitro-N-Nitrosoguanidine (NTG) and the colonies were screened for the colour mutants. The colonies exhibiting no colour were then subjected to a cycle of UV irradiation.

A pigment-reduced strain of *Chlorella protothecoides* was isolated and corresponds to *Chlorella protothecoides* 33-55, deposited on 13 October 2009 with the American Type Culture Collection (10801 University Boulevard, Manassas, Virginia 20110-2209) in accordance with the Treaty of Budapest.

In another embodiment, a strain of *Chlorella protothecoides* with a reduced pigmentation was isolated and corresponds to *Chlorella protothecoides* 25-32, deposited on 13 October 2009 at the American Type Culture Collection.

According to an embodiment of the invention, the microalgae are cultivated in a medium containing a fixed carbon source and a nitrogen source in the absence of light (heterotrophic conditions).

The solid and liquid growth media are generally available in the literature, and the recommendations for preparing the particular media which are suitable for a large variety of microorganism strains can be found, for example, online at http://www.utex.org/, a site maintained by the University of Texas at Austin for its culture collection of algae (UTEX).

The production of biomass may be carried out in bioreactors. The specific examples of bioreactors, the culture conditions, and the heterotrophic growth and the propagation method can be combined in any appropriate manner in order to improve the efficiency of the microbial growth and lipids and/or proteins production. Preferably, the culturing of the microalgae is performed in the dark in the presence of a fixed carbon source (e.g., sugar and/or glycerol).

In order to prepare the biomass for use such as the composition of foods, the biomass obtained at the end of fermentation is harvested from the fermentation medium. At the time that the microalgal biomass is harvested from the fermentation medium, the biomass comprises intact cells mostly in suspension in an aqueous culture medium.

In order to concentrate the biomass, a step of solid-liquid separation, by filtration or by centrifugation, may then be carried out.

After concentration, the microalgal biomass can be processed in order to produce vacuum-packed cakes, algal flakes, algal homogenates, algal powder, algal flour, or algal oils.

The microalgal biomass may also be dried in order to facilitate the subsequent processing or for use of the biomass in its various applications, in particular food applications.

The final food products have various textures and flavours depending on whether the algal biomass is dried, and if it is, according to the drying method used (See, for example, US 6,607,900, US 6,372,460, and US 6,255,505).

In a spray-drier, a liquid suspension is then sprayed in the form of a dispersion of fine droplets in a heated air stream. The material entrained is rapidly dried and forms a dry powder.

This microalgal flour may be prepared from concentrated microalgal biomass which has been mechanically lysed and homogenised, the homogenate then being spraydried or flash-dried.

In an embodiment, the cells may be lysed. The cell wall and the intracellular components may be milled or otherwise reduced, e.g., using a homogenizer, to particles (non-agglomerated lysed cells). In specific embodiments, the resulting particles may have an average size of less than 500 µm, 100 µm, or even 10 µm or less.

In an embodiment of the present invention, the lysed cells thus obtained are dried.

For example, a pressure disrupter can be used to pump a suspension containing the cells through a restricted orifice in order to lyse the cells. A high pressure (up to 1500 bar) is applied, followed by an instantaneous expansion through a nozzle.

The disruption of the cells may occur via three different mechanisms: encroachment on the valve, high shear of the liquid in the orifice, and sudden drop in pressure on outlet, causing the cell to explode.

The method releases intracellular molecules. A NIRO homogeniser (GEA NIRO SOAVI) (or any other high-pressure homogeniser) can be used to disrupt the cells.

This high-pressure treatment (e.g., up to approximately 1500 bar) of the algal biomass may lyse more than 90% of the cells and may reduce the particle size (e.g., to less than about 5 microns). In one embodiment, the pressure is from about 900 bar to 1,200 bar. Preferably, the pressure is about 1,100 bar.

In another embodiment, to increase the percentage of lysed cells, the algal biomass is subjected to high-pressure treatment two times or more. In an embodiment, double homogenization is used to increase the cell lysis to above 50%, above 75% or above 90%. Lysis of approximately 95% has been observed using this technique.

Lysis of the cells is optional, but preferred when a high-lipid flour (e.g. >10% lipid by dry weight) is to be produced. In an embodiment, a high-protein flour (e.g., less than 10% lipid by dry weight) is produced. The high-protein flour may be in an unlysed (intact cell) form. For some food applications, partial lysis (e.g., 25% to 75% of cells lysed) is desired.

Alternatively, a bead mill is used. In a bead mill, the cells are agitated in suspension with small abrasive particles. The disruption of the cells is caused by shear forces, the milling between the beads, and the collisions with beads. These beads disrupt the cells so as to release the cellular content therefrom. A description of a suitable bead mill is given, for example, in US patent 5,330,913.

A suspension of particles, optionally of smaller size than the cells of origin, in the form of an "oil-in-water" emulsion, may be obtained. This emulsion may then be spraydried, leaving a dry powder containing the cell debris and oil. After drying, the water content or the moisture content of the powder may be less than 10%, preferably less than 5%, more preferably less than 3%.

Embodiments of the present invention solve the aforementioned problems associated with prior art microalgal flour, by providing granules which have particular properties, such as favourable flavour, particle size distribution, flow, wettability, aerated bulk density, specific surface area, and dispersibilty behaviour in water as measured by emulsion droplet size and zeta potential.

Specific microalgal flour granules in accordance with embodiments of the invention are characterized in that they have one or more of the following properties:
- multimodal particle size distribution, e.g., as measured on a COULTER® LS laser particle size analyser, of 2 to 400 µm,
- flow grades, determined according to a test A, of 0.5 to 60% by weight for the oversize at 2000 µm, of 0.5 to 60% by weight for the oversize at 1400 µm and of 0.5 to 95% by weight for the oversize at 800 µm,
- degree of wettability, expressed according to a test B, by the height of the product settled in a beaker (600 mL squat form 125 mm tall beaker, e.g., Fisher Scientific product code FB33114), at a value of 0.2 to 4.0 cm, preferably 1.0 to 3.0 cm.

The microalgal flour granules according to the invention may be characterized by their particle size distribution. This measurement may be carried out on a COULTER® LS laser particle size analyser, equipped with its small volume dispersion module or SVM (125 ml), according to the specifications provided my the manufacturer (e.g., in the *"Small Volume Module Operating instructions").*

The microalgal flour granules in accordance with this embodiment of the invention then may have a multimodal particle size distribution, with particles characterized by a diameter of 2 to 400 µm. This "multimodal" distribution is understood to mean a population of granules divided up into multiple subpopulations of different granule size.

More particularly, in an embodiment of the present invention, the microalgal flour granules are characterized by two families of particle size distributions:
- a first family, said to be of "fine particle size", has a bimodal particle size distribution, of 2 to 60 µm, i.e. with two subpopulations centred on 4 µm and 30 µm;
- a second family, said to be of "large particle size", has a trimodal particle size distribution, in the range of 2 to 400 µm, with three subpopulations centred on 4 µm, 40 µm and 100 µm.

By way of example, the particle size distribution of the microalgal flour (dried conventionally by single-effect spray-drying such as in a box drier or tower drier) is believed to be of fine particle size of 2 to 100 µm, and to be monomodal, i.e. characterized by a single population of particle; e.g., centred on 40 µm.

In an embodiment of the present invention, the microalgal flour particles are agglomerated during processing. Despite the agglomeration, the microalgal flour granules according to the invention also have quite satisfactory flow capability, according to a test A. The resulting flow properties provide various advantages in the production of food from the microalgal flour. For example, more accurate measurements of flour quantities may be made during food product manufacturing, and dispensing of flour aliquots may be more readily automated.

The test A consists of measuring the degree of cohesion of the microalgal flour granules according to the invention. First the microalgal flour granules according to the invention are sieved with a mesh size of 800 µm. The flour granules which have a size of less than 800 µm are then recovered and introduced into a closed container, and undergo mixing by epicycloidal movement, e.g., using a TURBULA type T2C laboratory mixer. By virtue of this mixing, the microalgal flour granules in accordance with the invention will, according to their own characteristics, express their propensities to agglomerate or to push away one another.

The granules thus mixed are then deposited on a column of 3 sieves (2000 µm; 1400 µm; 800 µm) for a further sieving.

Once the sieving has ended, the oversize on each sieve is quantified and the result gives an illustration of the "cohesive" or "sticky" nature of the microalgal flour granules.

Thus, a free flowing, and therefore weakly cohesive, powder of granules will flow through sieves of large mesh size, but will be increasingly stopped as the meshes of said sieves become tighter.

A protocol for measuring particle size according to the Test A follows:
- sieve enough product on an 800 µm sieve so as to recover 50 g of product of size less than 800 µm,
- introduce these 50 g of flour granules of size less than 800 µm into a glass jar with a capacity of 1 litre (ref: BVBL Verrerie Villeurbannaise-Villeurbanne France) and close the lid,
- place this jar in the TURBULA model T2C mixer set to the speed of 42 rpm (Willy A. Bachofen Sarl-Sausheim-France) and mix for 5 minutes,
- prepare a column of 3 sieves (sold by SAULAS - diameter 200 mm; Paisy Cosdon - France) which will be placed on a Fritsch sieve shaker, model Pulverisette type 00.502; details of the assembly starting from the bottom to the top: sieve shaker, sieve base, 800 µm sieve, 1400 µm sieve, 2000 µm sieve, sieve shaker lid,
- deposit the powder resulting from the mixing on the top of the column (2000 µm sieve), close with the sieve shaker lid and sieve for 5 minutes on the FRITSCH sieve shaker, with an amplitude of 5 in the continuous position,
- weigh the oversize on each sieve.

The microalgal flour granules according to an embodiment of the invention then exhibit:
- 0.5 to 60% by weight for the oversize at 2000 µm,
- 0.5 to 60% by weight for the oversize at 1400 µm, and
- 0.5 to 95% by weight for the oversize at 800 µm.

More particularly, the microalgal flour granules according to the invention classified into two families, according to their particle size distribution, exhibit two distinct behaviours in terms of flow:
- the first family, of fine particle size, exhibits:
   ○ 30 to 60% by weight of oversize at 2000 µm,
   ○ 20 to 60% by weight of oversize at 1400 µm,
   ○ 0.5 to 20% by weight of oversize at 800 um;
- the second family, of large particle size, exhibits for its part:
   ○ 0.5 to 20% by weight of oversize at 2000 µm,
   ○ 0.5 to 20% by weight of oversize at 1400 µm,
   ○ 60 to 95% of oversize at 800 µm.

By way of comparison, as it will be shown hereinafter, the microalgal flour powders prepared by conventional drying techniques (single-effect spray-drying such as a tall form dryer or a box dryer) exhibit a sticky aspect, of low fluidity, which is reflected by a behaviour according to the test A:
- 50 to 90% by weight of oversize on 2000 µm,
- 0.5 to 30% by weight of oversize on 1400 µm,
- 5 to 40% by weight of oversize on 800 µm.

In other words, a majority of such microalgal flour powder (more than 50% of the powder) does not manage to cross the 2000 µm threshold, although initially sieved on 800 µm.

These results demonstrate that the conventional drying techniques result rather in the production of very cohesive powders, since, after mixing, using little mechanical energy, particles of less than 800 µm do not manage to pass through a sieve of 2000 µm, which nevertheless has a mesh size that is 2.5 times larger.

It is easily deduced therefrom that a conventional powder, exhibiting such a behaviour, is not easy to process in a preparation where a homogeneous distribution of the ingredients is recommended.

Conversely, microalgal flour compositions according to embodiments of the present invention are much easier to process because they are less sticky. The low level of stickiness is evident from several measures including small granule size, high wettability, and improved flowability.

Microalgal flour granules according to embodiments of the invention exhibit only a small oversize (< 50%) on 2000 µm for the family of granules of fine particle size, and very low or virtually no (e.g., <5%) oversize for the family of granules of large particle size. It is believed that the microalgal flour particles produced according to methods disclosed herein are less cohesive than granules prepared by prior methods. Nonetheless, within the flour of certain embodiments of the present invention, particles of smaller size are believed to be more cohesive than particles of larger size. Thus, there is a greater oversize for the fine particles.

The microalgal flour granules according to the invention are characterized by notable properties of wettability, according to a test B.

Wettability is a technological property that is very often used to characterize a powder resuspended in water, for example in the dairy industries.

Wettability may be measured by the ability of a powder to become immersed after having been deposited at the surface of water (Haugaard Sorensen et al., 1978), reflecting the capacity of the powder to absorb water at its surface (Cayot et Lorient, 1998).

The measurement of this index conventionally consists of measuring the time necessary for a certain amount of powder to penetrate into the water through its free surface at rest. According to Haugaard Sorensen et al. (1978), a powder is said to be "wettable" if the time to penetrate is less than 20 seconds.

It is also necessary to associate with the wettability the ability of the powder to swell. Indeed, when a powder absorbs water, it gradually swells. Then, the structure of the powder disappears when the various constituents are solubilised or dispersed.

Among the factors that influence wettability are the presence of large primary particles, the presence of the fines, the density of the powder, the porosity and the capillarity of the powder particles and also the presence of air, the presence of fats at the surface of the powder particles and the reconstitution conditions.

Test B more particularly reports on the behaviour of the microalgal flour powder brought into contact with water, by measuring, after a certain contact time, the height of the powder which decants when placed at the surface of the water.

The protocol for the Test B is the following:
- introduce 500 ml of demineralised (deionized) water at 20°C into a 600 ml squat-form beaker (FISHERBRAND FB 33114),
- place 25 g of the microalgal flour powder uniformly at the surface of the water, without mixing,
- observe the behaviour of the powder after 3 h of contact,
- measure the height of the product that has penetrated the surface of the water and settled at the bottom of the beaker.

A low-wettability powder will remain at the surface of the liquid, whereas for a powder of better wettability, more material will settle at the bottom of the beaker.

The microalgal flour granules according to the invention then have a degree of wettability, expressed according to this test B, by the height of the product settled in a beaker, at a value of 0.2 to 4.0 cm, preferably between 1.0 and 3.0 cm.

More particularly:
- the first family, of fine particle size, has a settled product height of 0.2 to 2.0 cm, preferably 1.2 to 1.4 cm.
- the second family, of large particle size, has a settled product height of 2.0 to 4.0 cm, preferably 2.6 to 2.9 cm.

By way of comparison, the flour of microalgae dried conventionally by single-effect spray-drying stays at the surface of the water to a greater extent than the flour described above, and does not become sufficiently hydrated to be able to decant to the bottom of the beaker.

Microalgal flour granules according to embodiments of the present invention are also characterized by:
- their aerated bulk density,
- their specific surface area, and
- their behaviour after dispersion in water.

The aerated bulk density is determined using a conventional method of measuring aerated bulk density, i.e. by measuring the mass of an empty container (g) of known volume, and by measuring the mass of the same container filled with the product to be tested.

The difference between the mass of the filled container and the mass of the empty container, divided by the volume (ml) then gives the value of the aerated bulk density.

For this test, the 100 ml container, the scoop used for filing and the scraper used are supplied with the apparatus sold by the company HOSOKAWA under the trademark POWDER TESTER type PTE.

To perform the measurement, the product is screened through a sieve with apertures of 2000 µm (sold by SAULAS). The density is measured on the product that is not retained on that screen.

Under these conditions, the microalgal flour granules according to embodiments of the invention have an aerated bulk density of 0.30 to 0.50 g/ml.

This aerated bulk density value is all the more notable since the microalgal flour granules in accordance with embodiments of the invention have a higher density than the flour of conventionally dried microalgae. It is believed that the density of a product will be lower if it is prepared by conventional spray-drying, e.g., less than 0.30 g/ml.

Microalgal flour granules in accordance with embodiments of the invention can also be characterized by their specific surface area.

The specific surface area is determined over the whole of the particle size distribution of the microalgal flour granules, e.g., by means of a Quantachrome specific surface area analyser based on a test for absorption of nitrogen onto the surface of the product subjected to the analysis, carried out on a SA3100 apparatus from Beckmann Coulter, according to the technique described in the article BET Surface Area by Nitrogen Absorption by S. BRUNAUER et al. (Journal of American Chemical Society, 60, 309, 1938).

Microalgal flour granules in accordance with an embodiment of the invention, were found to have a specific surface area of 0.10 to 0.70 m²/g after degassing for 30 minutes at 30°C under vacuum. More particularly, the family of microalgal flour granules of fine particle size had a specific surface area according to the BET method of 0.50 to 0.70 m²/g, preferably of about 0.55 m²/g.

Regarding the second family of microalgal flour granules of large particle size, it was found to have a specific surface area according to the BET method of 0.15 to 0.25 m²/g, preferably of about 0.20 m²/g.

By way of comparison, the flour of microalgae dried by conventional spray-drying was found to have a specific surface area according to BET of 0.65 m²/g.

It is surprising to note that the larger the size of the microalgal flour granules, the smaller their specific surface area is, since large granules tend to be comprised of agglomerated smaller particles.

Finally, the microalgal flour granules in accordance with the invention are characterized by their dispersibility in water.

This dispersibility is measured in the following way (Test C): 0.50 g of microalgal flour granules are dispersed in 500 ml of demineralised (deionized) water, and then the solution is homogenised at 300 bars in a PANDA homogeniser, sold by the company NIRO SOAVI.

Two parameters related to the water-dispersion ability of the products are measured:
- the size of the droplets of the emulsions formed after homogenisation (Test C-1),
- the zeta potential of the droplets, representing the electrostatic repulsion charge responsible for the stability of the discontinuous phase (hydrophobic globules) in the "continuous" aqueous phase (Test C-2).

The measurement of the droplet size may be carried out on a COULTER® LS laser particle size analyser and expressed in volume. The measurements reveal that the microalgal flour granules thus dispersed form an emulsion or suspension of which the particle size distribution has two populations of droplets or particles centered on 0.4 and 4 µm.

By way of comparison, the emulsions or suspensions obtained under the same conditions with conventional microalgal flours are instead characterized by two populations centred on 0.08 µm and 0.4 µm.

In accordance with an embodiment of the invention, the emulsion or suspension formed has a first population of droplets or particles centered on a value of 0.1 to 1 µm and a second population of droplets or particles centered on a value of 1 to 10 µm.

The microalgal flour granules in accordance with the invention, dispersed in water, therefore have a tendency to form emulsions or suspensions that are less fine than those conventionally obtained with conventionally dried microalgal powders.

As for the zeta potential (abbreviated to "ZP"), it makes it possible to predict the stability and coalescence and/or aggregation states of a colloidal system.

The measurement principle is based on the electrophoretic mobility of the electrolytes subjected to an alternating electric field.

The higher the ZP is in absolute value, the emulsion is considered to be more stable.

It should be noted that a ZP = 0 mV symbolises the coalesced and/or aggregated states.

In order to carry out the stability measurements, 0.1 N hydrochloric acid is added in order to vary the ZP and to thus find the isoelectric point (abbreviated to "pI") for which ZP = 0 mV.

In an embodiment, the ZP of the microalgal flour is less than -40 mV, and preferably less than -45 mV. In a further embodiment, the ZP is about -55 mV. The measurements carried out on the microalgal flour granules according to the invention show that they are stable for a pH > 5 and a ZP of - 55 mV. Their pI is 2.4.

By way of comparison, the conventional microalgal flours differ from the granules of the invention by virtue of their stability range (which begins at a pH of 4.5) with a ZP of -40 mV. Their pI is 2.5.

The microalgal flour granules in accordance with one or more of the above-described embodiments of the invention are capable of being obtained by a particular spray-drying process, which uses high-pressure spray nozzles in a concurrent-flow tower which directs the articles towards a moving belt at the bottom of the tower.

The material is then transported as a porous layer through post-drying and cooling zones, which give it a crunchy structure, like that of a cake, which breaks at the end of the belt. The material is then processed to a desired average particle size. In order to carry out the granulation of the algal flour, by following this spray-drying principle, a FILTERMAT™ spray-drier sold by the company GEA NIRO or a TETRA MAGNA PROLAC DRYER™ drying system sold by the company TETRA PAK can, for example, be used.

Surprisingly and unexpectedly, the granulation of the microalgal flour by implementing, for example, this Filtermat™ process makes it possible not only to prepare, with a high yield, a product in accordance with the invention in terms of the particle size distribution and of its flowability, but also to confer on it unexpected properties of wettability and dispersibility in water, without necessarily needing granulation binders or anti-caking agents (although these may be optionally included).

In accordance with an embodiment of the invention, the process for preparing the microalgal flour granules in accordance with the invention therefore comprises the following steps:
1) preparing a microalgal flour emulsion in water at a dry matter content of 15 to 40% by dry weight,
2) introducing this emulsion into a high-pressure homogeniser,
3) spraying it in a vertical spray-drier equipped with a moving belt at its base, and with a high-pressure nozzle in its upper part, while at the same time regulating:
   a) the pressure applied at the spray nozzles at values of more than 100 bar, preferably at 100 to 150 bar, or at values of less than 50 bar, so as to select the particle size distribution of the droplets sprayed,
   b) the spray angle is 50° to 80°, at an inlet temperature of 160° to 250°C, or 160° to 200°C, or 170° to 190°C, and
   c) the outlet temperature in this spray-drying zone is 55° to 90°C, preferably at 60° to 70°C,
4) regulating the inlet temperatures of the drying zone on the moving belt to 40° to 80°C, preferably at 60° to 80°C, and the outlet temperature of 40° to 80°C, preferably 60° to 70°C, and regulating the inlet temperatures of the cooling zone at a temperature of 10° to 40°C, preferably at 10° to 20°C, and the outlet temperature of 20° to 80°C, preferably 20° to 60°C,
5) collecting the microalgal flour granules thus obtained.

The first step of the process of the invention consists in preparing a suspension of microalgal flour, preferably lipid-rich microalgal flour, in water at a dry matter content of 15 to 40% by dry weight.

At the end of fermentation, the biomass can be at a concentration 130 to 250 g/1, with a lipid content of approximately 50% of dry weight, a fibre content of 10 to 50% of dry weight, a protein content of 2 to 15% of dry weight, and a sugar content of less than 10% of dry weight.

As will be exemplified hereinafter, the biomass extracted from the fermentation medium by any means known to those skilled in the art is subsequently:
- concentrated (e.g. by centrifugation),
- optionally preserved with the addition of standard preservatives (e.g., sodium benzoate and potassium sorbate).
- the cells disrupted.

The emulsion may then be homogenised. This may be accomplished with a two-stage device, for example a GAULIN homogeniser sold by the company APV, with a pressure of 100 to 250 bar at the first stage, and 10 to 60 bar at the second stage.

The homogenized flour suspension is then sprayed in a vertical spray-drier equipped with a moving belt at its base, and with a high-pressure nozzle in its upper part.

During this process, the following parameters may be regulated in any range that gives the desired particle properties:
a) the pressure applied at the spray nozzles; for example, at values greater than or equal to 100 bar, or at values less than or equal to 50 bar, so as to select the particle size distribution of the droplets sprayed,
b) the spray angle is 50° to 80°, at an inlet temperature of 160° to 250°C, or 160° to 200°C, or 170° to 190°C, and
c) the outlet temperature; for example, 55 to 90°C, preferably at 60° to 70°C.

The pressure applied and spray angle are believed to be critical parameters in determining the texture of the cake on the belt and then the resulting particle size distribution.

It is believed that:
- a pressure fixed at a value greater than or equal to 100 bar, preferably greater than or equal to 120 bar, results in the production of fine droplets which, once dried, will agglomerate into granules having a bimodal particle size distribution, from 2 to 60 µm, i.e. with two subpopulations centred on 4 µm and 30 µm, bound to one another via weak hydrophobic bonds,
- a pressure fixed at a value less than or equal to 50 bar causes the coalescence of droplets of larger particle size, and results in the formation of structures consisting of large granules bound to one another (and optionally with smaller granules), having a trimodal particle size distribution, ranging from 2 to 400 µm, with three subpopulations centred on 4 µm, 40 µm and 100 µm.

The two families of microalgal flour granules to which reference has been made above correspond to these two particular ways of carrying out spray-drying, i.e. based on the control of the pressure applied to the injection nozzle:
- the high pressure resulting in the first family of small particle size,
- the low pressure resulting in the second family of larger particle size.

The belt moves the algal material into a drying zone and then a cooling zone. The inlet temperatures of the drying zone on the moving belt to 40° to 80°C, preferably at 60° to 80°C, and the outlet temperature of 40° to 80°C, preferably 60° to 70°C, and regulating the inlet temperatures of the cooling zone at a temperature of 10° to 40°C, preferably at 10° to 20°C, and the outlet temperature of 20° to 80°C, preferably 20° to 60°C.

The microalgal flour granules according to the conditions of the preceding step of the process in accordance with the invention fall onto the moving belt with a residual moisture content of 2 to 4%.

Use of the above mentioned temperature ranges may bring the degree of moisture of the microalgal flour granules to a desired value of less than 4%, and more preferably less than 2%.

Optionally, an antioxidant (e.g., BHA, BHT, or others known in the art) can be added prior to drying to preserve freshness.

The final step of the process according to the invention consists, finally, in collecting the microalgal flour granules thus obtained.

The present invention relates to the microalgal four granules as defined in the present invention or as obtained by the process disclosed in the present invention.

A preferred microalgal flour granules according to the invention contain at least 10% by dry weight of lipid, preferably at least 25 to 35% or more by dry weight of lipid. In particular, it may contain at least 25%, at least 50%, or at least 75% of lipid by dry weight.

As detailed above, the granules may contain mainly intact cells, a mixture of intact cells and disrupted cells, or mainly disrupted cells. In a preferred embodiment, the percentage of intact cells in the granules of the invention is 25% to 75%

Flour granules produced according to the embodiments described herein may be incorporated into a food product such as a soup, sauce, condiment, ice-cream, dehydrated eggs, dough, bread, cake, cookie, or dry baked-good mix. Therefore, the present invention relates to the use of the microalgal flour granules according to the invention in a food product, to a method for preparing a food product comprising the addition of the microalgal flour granules according to the invention to other components of the food product, and to a food product containing the microalgal flour granules according to the invention. For instance, the product is selected from the group consisting of soup, sauce, condiment, ice-cream, dehydrated eggs, dough, bread, cake, cookie, or dry baked-good mix.

Other characteristic features and advantages of the invention will be apparent on reading the following Examples. However, they are given here only as an illustration and are not limiting.

### Example 1. Production of the microalgal flour

In an illustrative fermentation, a low-pigment mutant strain of *Chlorella protothecoides* (obtained through chemical and UV mutagenesis) was cultured and the resulting algal biomass was at a cell concentration of 150 g/l. Methods for producing and culturing low pigmentation *Chlorella protothecoides* are disclosed in U.S. Patent Application Pub. No. 2010-0297292, published November 25, 2010.

The washed biomass was milled using a bead mill with a lysis rate of 95%.

The biomass thus generated was pasteurised and homogenised under pressure in a GAUVIN two-stage homogeniser (250 bar at the first stage / 50 bar at the second) after adjustment of the pH to 7 with potassium hydroxide.

### Example 2. Drying of the homogenised "oil-in-water" emulsion of microalgal flour

The biomass obtained in Example 1 were dried:
- in a FILTERMAT device, so as to obtain the microalgal flour,
- in a single-effect spray-drier (liquid dried by means of a single pass through the heat flow and then recovered at the bottom of the tower at the level of the cyclone or of the sleeve filter), sold by GEA NIRO, so as to obtain a control microalgal flour, in accordance with what is commercially accessible.

The single-effect spray-drying operating conditions were the following:
- inlet temperature of 180°C
- outlet temperature: 85°C.

The product obtained with the single-effect spray-drying had a fine particle size distribution, centered on 40 µm.

As regards a spray-drying process in accordance with embodiments of the invention, it consisted of spraying the homogenised suspension at high pressure in a FILTERMAT device sold by the company GEA/NIRO, equipped with a DELAVAN high-pressure injection nozzle, under the following conditions:
1) to obtain the granules of fine particle size:
   - the spray angle was regulated at 60 to 75°,
   - the pressure was regulated at more than 100 bar, in this case 120 bar;
2) to obtain the granules of large particle size:
   - the spray angle was regulated at between 60 to 70°
   - the pressure was regulated at less than 50 bar,

Then, in a similar manner for the two particle sizes sought, the temperature parameters were regulated in the following way:
- spray-drying inlet temperature: 180°C
- outlet temperature: 65°C
- drying zone inlet temperature: 80°C
- outlet temperature: 65°C
- cooling zone inlet temperature: 15°C

The powder then arrived on the belt with a residual moisture content of 2 to 4%.

On leaving the belt: the microalgal flour granules had a residual moisture content of from 1 to 3%, about 2%.

### Example 3. Characterization of the microalgal flour granules in accordance with embodiments of the invention

The following tables give the values of the parameters of:
- particle size,
- flowability,
- wettability,
- aerated bulk density,
- specific surface area,
- behaviour after dispersibility in water:
   o particle size profile
   o zeta potential
of the microalgal flour granules in accordance with the invention, compared with these same parameters of a flour of microalgae dried by simple spray-drying in accordance with the conditions described in example 2.

**Table I. Particle size (COULTER LS laser particle size analyser**

| | Particle size distribution |
|---|---|
| Control of flour dried by single-effect spray-drying | Monomodal, 2 to 100 µm, centred on 40 µm |
| Flour granules according to the invention of fine particle size | Bimodal, 2 to 60 µm centred on 4 and 30 µm |
| Flour granules according to the invention of large particle size | Trimodal, 2 to 400 µm centred on 4, 40 and 100 µm |

Granulation on a FILTERMAT device made it possible to obtain populations of granules that are polydisperse, which will condition their notable properties, such as:

### - Flowability:

**Table II. Flowability (Cohesion test A)**

| | Oversize at 2000 µm (% by weight) | Oversize at 1400 µm (% by weight) | Oversize at 800 µm (% by weight) |
|---|---|---|---|
| Control of flour dried by single-effect spray-drying | 71 | 18 | 8 |
| Flour granules according to the invention of fine particle size | 42 | 38 | 8 |
| Flour granules according to the invention of large particle size | 0.9 | 6 | 80 |

More than 70% of microalgal flour dried by single-effect spray-drying did not manage to flow through the 2000 µm filter (although initially sieved on 800 µm), conveying the "tacky" nature of the particles making up said flour, whereas approximately 60% of microalgal flour granules in accordance with the invention of fine particle size, or even virtually all microalgal flour granules in accordance with the invention of large particle size, managed to do so.

### - Wettability:

**Table III. Wettability (test B)**

| | Height of powder settled after 3 hours (cm) |
|---|---|
| Control of flour dried by single-effect spray-drying | Does not decant |
| Flour granules according to the invention of fine particle size | 1.3 |
| Flour granules according to the invention of large particle size | 2.8 |

It is noted that the conventional microalgal flour, characterized by "cohesive" particles, does not manage to hydrate sufficiently in order to settle, whereas the microalgal flour granules prepared by the present invention managed to do so without difficulty, to a degree that depended on their particle size distribution.

The granules of large particle size in fact settle more readily than the granules of fine particle size.

### - Density and specific surface area parameters:

**Table IV. Density and specific surface area**

| | Aerated bulk density (g/ml) | Specific surface area (m²/g) |
|---|---|---|
| Control of flour dried by single-effect spray-drying | 0.27 | 0.65 |
| Flour granules according to the invention of fine particle size | 0.35 | 0.55 |
| Flour granules according to the invention of large particle size | 0.43 | 0.20 |

As indicated previously, it is noted that, surprisingly, the microalgal flour granules prepared by embodiments of the present invention had a higher aerated bulk density than that of the microalgal flour dried by more conventional means.

It should also be noted that, by virtue of their particle size distribution, the microalgal flour granules have, compared with the microalgal flour, a smaller specific surface area.

### - Dispersibility in water

These measurements were carried out on microalgal flour granules homogenised in water so as to more accurately convey their functional properties.

**Table V. Dispersibility in water**

| | Particle size distribution Bimodal distribution (µm) | | pI | Zeta potential (mV) |
|---|---|---|---|---|
| Control of flour dried by single-effect spray-drying | 0.08 | 0.4 | 2.5 | - 40 |
| Flour granules according to the invention of fine particle size | 0.4 | 4 | 2.4 | - 55 |
| Flour granules according to the invention of large particle size | 0.4 | 4 | 2.4 | - 55 |

Once homogenised, the granules of fine and large particle size exhibited identical behaviour, and formed dispersions that were more stable than those obtained with conventional flours.

## Claims

1. Microalgal flour granules, **characterized in that** they have at least of the following characteristics:
- a multimodal particle size distribution, measured on a particle size analyser, of from 2 to 400 µm,
- flow grades, determined according to a test A,
○ 0.5 to 60% by weight for the oversize at 2000 µm,
○ 0.5 to 60% by weight for the oversize at 1400 µm,
○ 0.5 to 95% by weight for the oversize at 800 µm,
- a degree of wettability, expressed according to a test B, by the height of the product settled in a beaker, at a value of 0.2 to 4.0 cm, preferably 1.0 to 3.0 cm.

2. Granules according to Claim 1, **characterized in that** they have:
- a bimodal particle size distribution, from 2 to 60 µm, comprising two populations centred on 4 µm and 30 µm ;
- flow grades, determined according to a test A,
○ 30 to 60% by weight of oversize at 2000 µm,
○ 20 to 60% by weight of oversize at 1400 µm,
○ 0.5 to 20% by weight of oversize at 800 µm,
- a degree of wettability, expressed according to a test B, by the height of the product settled in a beaker, at a value of 0.2 to 2.0 cm, preferably 1.2 to 1.4 cm.

3. Granules according to Claim 1, **characterized in that** they have:
- a trimodal particle size distribution, from 2 to 400 µm, comprising three populations centred on 4 µm, 40 µm and 100 µm,
- flow grades, determined according to a test A,
○ 0.5 to 20% by weight of oversize at 2000 µm,
○ 0.5 to 20% by weight of oversize at 1400 µm,
○ 60 to 95% of oversize at 800 µm,
- a degree of wettability, expressed according to a test B, by the height of the product settled in a beaker, at a value of 2.0 to 4.0 cm, preferably 2.6 to 2.9 cm.

4. Granules according to any one of Claims 1 to 3, **characterized in that** they have an aerated bulk density of 0.30 to 0.50 g/ml.

5. Granules according to any one of Claims 1 to 4, **characterized in that** they have a specific surface area according to the BET method of 0.10 to 0.70 m²/g.

6. Granules according to Claim 2, **characterized in that** they have a specific surface area according to the BET method of 0.50 to 0.70 m²/g, preferably of 0.55 m²/g.

7. Granules according to Claim 3, **characterized in that** they have a specific surface area according to the BET method of 0.15 to 0.25 m²/g, preferably of 0.20 m²/g.

8. Granules according to any one of Claims 1 to 7, **characterized in that** their dispersibility in water is reflected by:
- a bimodal particle size distribution having two populations centred on 0.4 and 4 µm,
- a Zeta potential of -45 mV for a pH > 5 and a pI of 2.4.

9. Granules according to any one of Claims 1 to 8, **characterized in that** the percentage of lipid is at least 25% by dry weight.

10. Granules according to any one of Claims 1 to 9, **characterized in that** the percentage of intact cells is 25% to 75%.

11. A process for preparing the granules according to any one of Claims 1 to 10, **characterized in that** it comprises the following steps:
1) preparing a microalgal flour emulsion in water at a dry matter content of 15 to 40% by dry weight,
2) introducing this emulsion into a high-pressure homogeniser,
3) spraying it in a vertical spray-drier equipped with a moving belt at its base, and with a high-pressure nozzle in its upper part, while at the same time regulating:
a) the pressure applied at the spray nozzles at values of more than 100 bar, preferably at 100 to 150 bar, or at values of less than 50 bar, so as to select the particle size distribution of the droplets sprayed,
b) the spray angle is 50° to 80°, at an inlet temperature of 160° to 250°C, or 160° to 200°C, or 170° to 190°C, and
c) the outlet temperature in this spray-drying zone is 55° to 90°C, preferably at 60° to 70°C,
4) regulating the inlet temperatures of the drying zone on the moving belt to 40° to 80°C, preferably at 60° to 80°C, and the outlet temperature of 40° to 80°C, preferably 60° to 70°C, and regulating the inlet temperatures of the cooling zone at a temperature of 10° to 40°C, preferably at 10° to 20°C, and the outlet temperature of 20° to 80°C, preferably 20° to 60°C,
5) collecting the microalgal flour granules thus obtained.

12. A process according to Claim 11 for preparing the granules of Claim 2, **characterized in that**
- the pressure applied at the spray nozzles is greater than or equal to 100 bar,
- the spray angle 65 to 70°

13. A process according to Claim 11 for preparing the granules of Claim 3, **characterized in that**
- the pressure applied at the spray nozzles is less than or equal to 50 bar,
- the spray angle is 65 to 70°.

14. Use of the granules of any one of Claims 1 to 10 or obtained according to the process of any one of Claims 11 to 13, in a food product.

15. Use of the granules of Claim 2, or obtained according to the process of Claim 12, in a food product.

16. Use of the granules of Claim 3, or obtained according to the process of Claim 13, in a food product.

17. A food product containing the granules of any one of claims 1 to 10, or obtained according to the process of any one of Claims 11 to 13.

18. The food product according to claim 17, wherein the product is selected from the group consisting of soup, sauce, condiment, ice-cream, dehydrated eggs, dough, bread, cake, cookie, or dry baked-good mix.
